# EUROPEAN PATENT SPECIFICATION

(11) **EP 1 457 540 B1**
(45) Date of publication and mention of the grant of the patent: **13.12.2006**
(21) Application number: 04251316.8
(22) Date of filing: 08.03.2004
(51) Int. Cl.: C09J 7/00, C09J 7/02, A43B 13/32, A43B 9/12, B32B 7/12

(54) **Adhesive coated slabs for sole manufacture in footwear assemblies**
Klebstoffbeschichtete Platten zur Herstellung von Sohlen eines Schuhwerks
Plaques revêtues d'adhésif pour la construction de semelle de chaussures

(30) Priority: 14.03.2003 US 389111
(43) Date of publication of application: 15.09.2004
(73) Proprietor: WORTHEN INDUSTRIES INC., Nashua, NH 03060 (US)
(72) Inventor: Sasongko, Sun, Medford, Massachusetts 02155 (US)
(74) Representative: Bankes, Stephen Charles Digby

(56) References cited:
- EP-A- 0 322 045
- EP-A- 0 910 965
- EP-A- 1 151 853
- EP-A- 1 323 800
- DE-A- 2 442 083
- US-A- 5 741 594

## Description

The invention relates to a method for making a sole for footwear.

In the manufacture of footwear assemblies, ultimately a sole is attached to an upper. Almost without exception, adhesives are used, and in the high-end footwear assemblies, the upper is also stitched to the sole either directly or through an intermediate construction. In addition to adhesion, sealing the interface between the sole and the upper is also a consideration.

In molding soles, such as soles which are injection molded, an adhesive film can be secured to the upper portion of the mold and then the sole is molded. The adhesive film adheres to the sole. The molded sole is ejected from the mold with the adhesive film in situ, for subsequent attachment to an upper.

When the soles are compression molded, the sole material is initially in the form of a generally rectangular slab. 'Cookies' which will become soles, are cut from the slab. A mold release agent may be used in the molding process and the cookie after molding is a sole. The mold release agent is removed. A primer and a liquid adhesive are applied to the sole and the sole is ultimately attached to an upper. It is not feasible to place the adhesive in the mold. Also, it is not feasible to apply the adhesive to the moulded soles inside the mould as it is too time consuming.

US-A-5,741,594 discloses a laminate which can be used *inter alia* for shoe soles, comprising a first substrate adhesively bonded to a second substrate through an adhesion promoter. The first substrate comprises a linear olefin copolymer and the adhesion promoter comprises a polar group-functionalized linear olefin copolymer.

The present invention consists in a method of making a sole for footwear from a slab material comprising an unmolded sole material having an upper surface, an outer, thermoplastic polyurethane based adhesive secured to said upper surface and an inner, ethylene copolymer-based, adhesive interfacing between said sole material and said outer adhesive, said method including the steps of applying the inner and outer adhesives to the upper surface of the sole material and cutting a cookie from the laminated slab thus formed, characterised in that the cookie is then subjected to compression moulding to form a sole with said two adhesive layers bound to its upper surface. The adhesives may be applied singly or as a coextrusion by nip roller, spraying as a film etc. The cookies are formed, compression moulded, and the sole is ready for attachment to an upper. Separate priming and adhesive application steps are eliminated.

The inner adhesive is preferably an ethylene copolymer based adhesive and the outer adhesive is preferably a thermoplastic polyurethane based adhesive.

After attachment of the sole to the upper, the adhesive bond between the sole and the upper must meet or exceed the published standards of SATRA (Shoe & Allied Trade Research Association) for sole-attaching adhesives, specifically SATRA TM409, Heat resistance/heat ageing of sole bonds in complete footware; SATRA TM92, Resistance to Footwear Flexing; and SATRA TM411 Peel strength of footwear.

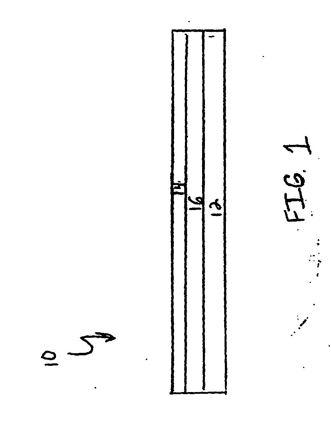

The accompanying drawing is an illustration of a sole for footwear assembly in accordance with the invention.

In the method of the present invention, one adhesive is preferably an ethylene copolymer based adhesive and the outer adhesive is preferably a thermoplastic polyurethane based adhesive. The thermoplastic outer adhesive bonds to a polar material. The ethylene copolymer based adhesive bonds to a non-polar material. The adhesives may be applied singly or as a coextrusion by nip roller, spraying as a film, etc.

The invention will be described with reference to the following non-limiting example. An ethylene vinyl acetate slab, e.g. approximately 99x132cm (39 x 52 inches) and having a thickness of 3.175 to 101.6 mm (0.125" to 4.0"), depending upon the intended use for the sole and the sole size is coated on the surface which will become a sole upper.

A thermoplastic polyurethane elastomer, e.g. Irogran^{®} CA116 Huntsman, is coextruded in a thickness of 12.7 to 127 µm (0.005" to 0.005") with an anhydride modified ethylene vinyl acetate, e.g. Bynel^{®} Series 3800, and specifically Bynel^{®} E418, or Fusabond^{®} C Series, specifically MC 190D, DuPont, in a thickness 12.7 to 127 µm (0.0005" to 0.005") and laminated to form a coextrudate. The coextrudate is then laminated to the unmolded ethylene copolymer based slab with the ethylene vinyl acetate based adhesive, interfacing with the ethylene vinyl acetate slab by passing through nip rolls at a pressure of 414 kPa to 6.895 MPa (60 to 1000 psi) and a temperature of greater than the activation temperature of the ethylene copolymer based adhesives.

As is well known in the art, the cookies are subsequently cut and then compression molded according to prior art techniques to form a sole having an upper surface to which the adhesive coextrudate is bound.

Referring to the drawing, the sole is shown generally as 10 and comprises sole material 12, thermoplastic polyurethane elastomer 14 with an anhydride modified ethylene vinyl acetate 16.

The sole can now be bound to an upper without the necessity for further treatment steps.

Although described with reference to specific thermoplastic polyurethane adhesives and ethylene copolymer based adhesives, other suitable adhesives include thermoplastic polyurethane blends and polyester or polyamides.

Adhesives include the following extrudate combinations: anhydride or acid modified ethylene vinyl acetate/thermoplastic polyurethane; acid modified acrylic acetate/thermoplastic polyurethane or acrylic modified polyurethane; acrylic or acid modified acetate/thermoplastic polyurethane; acrylic or acid modified acrylic acids/polyesters; acid or anhydride modified polyolefins/thermoplastic polyurethanes or acrylate modified polyurethanes or acid or anhydride modified polyolefins or acid or anhydride modified acrylic acids/thermoplastic polyurethane or acrylate modified polyurethanes; ethylene copolymers/thermoplastic polyurethanes.

Specifically, the following sole material/inner adhesive/outer adhesive/upper combinations are believed to be suitable for purposes of the invention, where all soles are compression molded:

| Sole Material | Inner Adhesive | Outer Adhesive | Upper |
|---|---|---|---|
| Phylon or EVA | acid or anhydride modified EVA | thermoplastic polyurethane | leather |
| Phylon or EVA | acid or anhydride modified acrylic | thermoplastic polyurethane or polyurethane acrylate | leather |
| EPDM polymers or copolymers | acid or anhydride modified polyolefins | thermplastic polyurethane or polyurethane acrylate | leather or fabric |
| Natural rubber or SBR | acid or anhydride modified polyolefins | thermoplastic polyurethane, polyurethane acrylates, or polyesters | leather or fabric |

## Claims

1. A method of making a sole for footwear from a slab material (10) comprising an unmolded sole material (12) having an upper surface, an outer, thermoplastic polyurethane based adhesive (14) secured to said upper surface and an inner, ethylene copolymer-based, adhesive interfacing between said sole material and said outer adhesive, said method including the steps of applying the inner and outer adhesives (14, 16) to the upper surface of the sole material and cutting a cookie from the laminated slab (10) thus formed, **characterised in that** the cookie is then subjected to compression moulding to form a sole with said two adhesive layers bound to its upper surface.

2. A method according to claim 1 wherein said inner and outer adhesive layers (14, 16) are co-extruded to form a laminate.

3. A method according to claim 1 or claim 2 wherein the inner adhesive layer (16) is applied to the upper surface of the sole material (12) by laminating.

4. A method according to any preceding claim wherein the inner adhesive (16) is selected from acid-modified acrylic acetates, acrylic or acid modified acetates, acrylic or acid modified acrylic acids, acid or anhydride modified polyolefins, and ethylene copolymers.

5. A method according to any preceding claim wherein the outer adhesive is selected from thermoplastic polyurethanes, acrylic modified polyurethanes, acrylate modified polyurethanes, polyesters and polyamides.

6. A method according to any preceding claim wherein the unmolded sole material is selected from ethylene copolymers, Phylon, EVA, EDPM polymers or copolymers and natural and synthetic rubbers.

7. A method according to any preceding claim wherein the inner and outer adhesives (14, 16) each have a thickness in a range of 12.7 to 127 µm (0.0005 to 0.005 inches).

8. A method according to any preceding claim wherein the sole material has a thickness in a range of 3.175 mm to 10.2 cm (0.125 to 4.0 inches).

9. A method according to any preceding claim wherein when the outer adhesive (14) is bonded to an upper, an adhesive bond forms that meets or exceeds SATRA standards TM409, TM92 and TM411.

## Patentansprüche

1. Verfahren zur Herstellung einer Schuhsohle aus einem Plattenmaterial (10), das ein ungeformtes Sohlenmaterial (12) mit einer oberen Oberfläche, einem äußeren, thermoplastischen Klebstoff auf Polyurethanbasis (14), der an der oberen Oberfläche befestigt ist, und einem inneren Klebstoff auf der Basis eines Ethylen-Copolymeren, der zwischen dem Sohlenmaterial und dem äußeren Klebstoff liegt, umfasst, wobei das Verfahren die Stufen des Aufbringens des inneren und des äußeren Klebstoffs (14, 16) auf die obere Oberfläche des Sohlenmaterials und das Ausschneiden eines Cookies aus der auf diese Weise gebildeten laminierten Platte (10) umfasst, **dadurch gekennzeichnet, dass** das Cookie anschließend einer Pressformgebung unterzogen wird, um eine Sohle mit zwei an ihrer oberen Oberfläche gebundenen Klebstoffschichten zu bilden.

2. Verfahren nach Anspruch 1, wobei die innere und die äußere Klebstoffschicht (14, 16) zur Bildung eines Laminats koextrudiert werden.

3. Verfahren nach Anspruch 1 oder 2, wobei die innere Klebstoffschicht (16) auf die obere Oberfläche des Sohlenmaterials (12) durch Laminieren aufgebracht wird.

4. Verfahren nach einem der vorstehenden Ansprüche, wobei der innere Klebstoff (16) aus säuremodifizierten Acrylacetaten, acryl- oder säuremodifizierten Acetaten, acryl- oder säuremcdifizierten Acrylsäuren, säure- oder anhydridmodifizierten Polyolefinen und Ethylen-Copolymeren ausgewählt ist.

5. Verfahren nach einem der vorstehenden Ansprüche, wobei der äußere Klebstoff aus thermoplastischen Polyurethanen, acrylmodifizierten Polyurethanen, acrylatmodifizierten Polyurethanen, Polyestern und Polyamiden ausgewählt ist.

6. Verfahren nach einem der vorstehenden Ansprüche, wobei das ungeformte Sohlenmaterial aus Ethylen-Copolymeren, Phylon, EVA, EDPM-Polymeren oder -Copolymeren und natürlichen und synthetischen Kautschukarten ausgewählt ist.

7. Verfahren nach einem der vorstehenden Ansprüche, wobei der innere und der äußere Klebstoff (14, 16) jeweils eine Dicke im Bereich von 12,7 bis 127 *µ*m (0,0005 bis 0,005 Zoll) aufweisen.

8. Verfahren nach einem der vorstehenden Ansprüche, wobei das Sohlenmaterial eine Dicke im Bereich von 3,175 mm bis 10,2 cm (0,125 bis 4,0 Zoll) aufweist.

9. Verfahren nach einem der vorstehenden Ansprüche, wobei dann, wenn der äußere Klebstoff (14) an einen oberen Klebstoff gebunden ist, eine Klebstoffbindung entsteht, die die SATRA-Standards TM409, TM92 und TM411 erfüllt oder diese übertrifft.

## Revendications

1. Procédé de fabrication d'une semelle de chaussure à partir d'un matériau en plaque (10) comprenant un matériau de semelle non moulé (12) présentant une surface supérieure, un adhésif à base de polyuréthane thermoplastique (14) extérieur, fixé à ladite surface supérieure et un adhésif intérieur à base de copolymère d'éthylène se trouvant à l'interface du matériau de semelle et dudit adhésif extérieur, ledit procédé comprenant les étapes consistant à appliquer les adhésifs intérieur et extérieur (14, 16) sur la surface supérieure du matériau de semelle et à découper un élément de soutien de la plaque stratifiée (10) ainsi formée, **caractérisé en ce que** l'élément de soutien est ensuite soumis à un moulage par compression pour former une semelle avec lesdites deux couches adhésives liées à sa surface supérieure.

2. Procédé selon la revendication 1, dans lequel lesdites couches adhésives interne et externe (14, 16) sont co-extrudées pour former un stratifié.

3. Procédé selon la revendication 1 ou la revendication 2, dans lequel la couche adhésive intérieure (16) est appliquée à la surface supérieure de matériau de semelle (12) par stratification.

4. Procédé selon l'une quelconque des revendications précédentes, dans lequel l'adhésif interne (16) est choisi parmi les acétates d'acrylique modifiés par un acide, les acétates modifiés par un acrylique ou un acide, les acides acryliques modifiés par un acrylique ou un acide, les polyoléfines modifiées par un acide ou un anhydride et les copolymères d'éthylène.

5. Procédé selon l'une quelconque des revendications précédentes, dans lequel l'adhésif extérieur est choisi parmi les polyuréthanes thermoplastiques, les polyuréthanes modifiés par un acrylique, les polyuréthanes modifiés par un acrylate, les polyesters et les polyamides.

6. Procédé selon l'une quelconque des revendications précédentes, dans lequel le matériau de semelle non moulé est choisi parmi les copolymères d'éthylène, le Phylon, l'EVA, les polymères ou copolymères d'EDPM et les caoutchoucs naturels et synthétiques.

7. Procédé selon l'une quelconque des revendications précédentes, dans lequel les adhésifs interne et externe (14, 16) présentent respectivement une épaisseur de l'ordre de 12,7 à 127 µm (0,0005 à 0,005 pouces).

8. Procédé selon l'une quelconque des revendications précédentes, dans lequel le matériau de semelle présente une épaisseur de l'ordre de 3,175 mm à 10,2 cm (0,125 à 4,0 pouces).

9. Procédé selon l'une quelconque des revendications précédentes, dans lequel lorsque l'adhésif extérieur (14) est lié à un adhésif supérieur, une liaison adhésive se forme, correspondant ou dépassant les normes SATRA TM409, TM92 et TM411.
